(19) Europäisches Patentamt

European Patent Office

Office européen des brevets

(11) EP 0 579 332 B1

(12) EUROPEAN PATENT SPECIFICATION

(45) Date of publication and mention
of the grant of the patent:
03.04.1996 Bulletin 1996/14

(51) Int Cl.⁶: G08B 13/24

(21) Application number: 93202073.8

(22) Date of filing: 14.07.1993

(54) **Electromagnetic detection system**

Elektromagnetisches Detektor System

Système de detection électromagnétique

(84) Designated Contracting States:
AT CH DE FR GB LI NL

(30) Priority: 15.07.1992 NL 9201270

(43) Date of publication of application:
19.01.1994 Bulletin 1994/03

(73) Proprietor: N.V. Nederlandsche
Apparatenfabriek NEDAP
NL-7141 DE Groenlo (NL)

(72) Inventor: Rebers, Paulus
NL-7141 PJ Groenlo (NL)

(74) Representative:
Smulders, Theodorus A.H.J., Ir. et al
Vereenigde Octrooibureaux
Nieuwe Parklaan 97
NL-2587 BN 's-Gravenhage (NL)

(56) References cited:
EP-A- 0 186 483          EP-A- 0 478 092
DE-A- 3 045 703

# Description

The invention relates to an electromagnetic detection system comprising at least one source circuit and at least one source circuit-controlled antenna configuration, which comprises two loop antenna coils, substantially located in one plane or in closely spaced parallel planes, for generating a detection field in a detection zone, and a plurality of responders, provided with a loop antenna coil, detectable in the detection zone by means of the detection field.

Presently, eight-shaped antennas are typically used in RF-systems for shoplifting detection. Eight-shaped antennas have the advantage that the field strength at a short distance (up to approximately half the height) is relatively strong compared to the field strength at a large distance, the antenna thus being less susceptible to interference from outside the system than, for instance, zero-shaped antennas. The drawback of eight-shaped antennas is that at half-level, the field lines are vertically oriented. At this level, a vertically oriented label does not cross any field lines and is therefore not detected, unlike a label at a different level.

However, the position of a label, attached to an article which is carried in a trouser pocket (ca. half-level) is usually vertical; consequently, the label is not detected. The phenomenon that at trouser pocket level the label can pass the passageway without being detected is commonly referred to as the trouser pocket effect. This effect does not occur in the case of an antenna configuration that generates a rotary field. Such an antenna configuration is for instance disclosed in EP-A-0186483. The known antenna configuration comprises two loop antennas, separately controlled by two transmitters. Compared to the situation in which one antenna is used, this configuration requires double transmission power for the same field strength.

The object of the invention is to overcome this drawback and generally to provide a simply yet reliably operating detection system, in particular suitable for shoplifting detection.

To this end, according to the invention, an electromagnetic detection system of the type described hereinabove is characterized in that one loop antenna coil of the antenna configuration is part of a series resonance circuit, and that the other loop antenna coil is part of a parallel resonance circuit, the series resonance and parallel resonance circuits having the same resonance frequency and being interconnected to form a combined antenna network connected to the source circuit, and the series resonance and parallel resonance circuits being dimensioned such that the frequency-dependent parts of the impedances substantially compensate each other, so that the combined antenna network has a substantially frequency-independent impedance.

The invention will be further explained hereinafter, with reference to the accompanying drawings, in which:

Fig. 1 schematically illustrates an eight-shaped antenna with the detection field formed by it;
Fig. 2 schematically shows an example of a parallel resonance circuit;
Fig. 3 schematically shows the impedance variation of the circuit of Fig. 1 as a function of the frequency;
Fig. 4 schematically shows an example of a series resonance circuit;
Fig. 5 schematically shows the impedance variation of the circuit of Fig. 4 as a function of the frequency;
Fig. 6 schematically shows an example of a combined circuit having a parallel resonance circuit and a series resonance circuit;
Fig. 7 schematically shows the voltage variation over the circuit of Fig. 6 as a function of the frequency;
Fig. 8 schematically shows a first exemplary embodiment of an antenna configuration for use in a system according to the invention; and
Fig. 9 schematically shows a second exemplary embodiment of an antenna configuration for use in a system according to the invention.

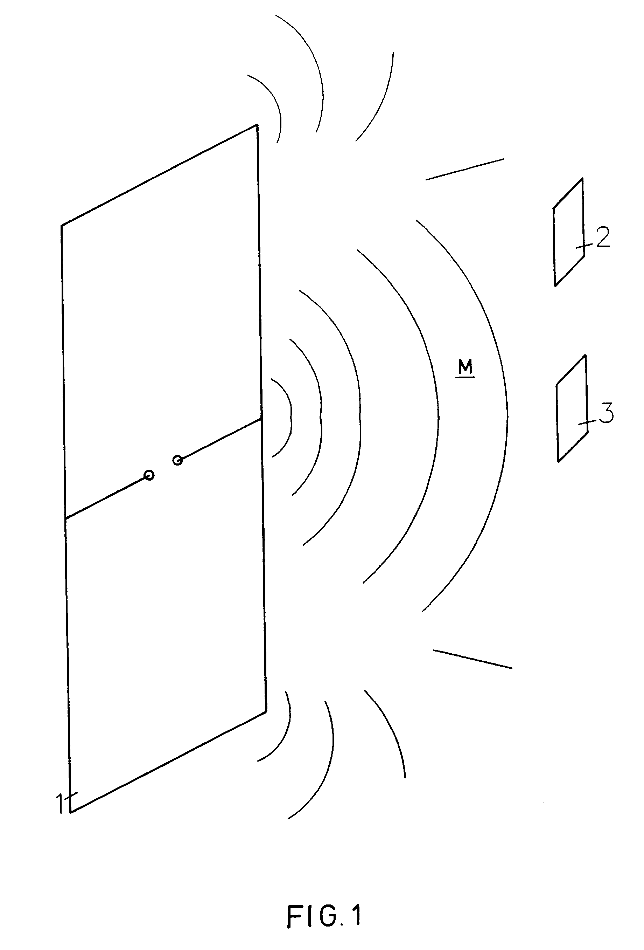

Fig. 1 shows an eight-shaped antenna 1 which, as is conventional in shoplifting systems, is positioned substantially vertically to form a detection field M in a detection zone typically located near an exit. Detection labels that may still be attached to articles carried along by customers, also referred to as responders or transponders, can be detected in the detection zone. Such responders comprise a resonance circuit tuned to the frequency of the detection field, whose coil is at least partly designed as a loop antenna. In Fig. 1, two responders are schematically indicated by 2 and 3.

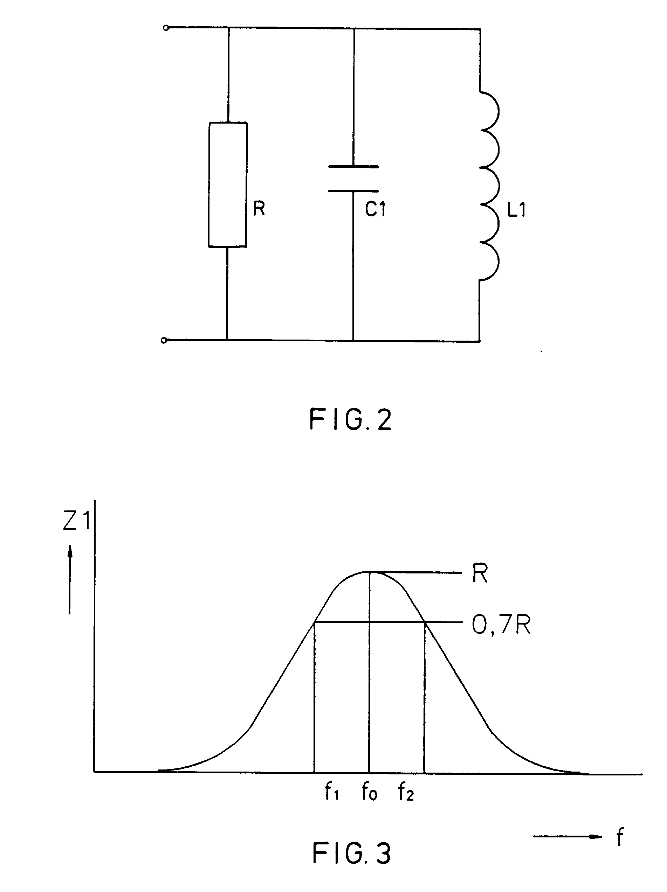

Typically, antennas are controlled as a parallel circuit (see Fig. 2) having a resonance frequency fo, determined by the (antenna) coil L1, the capacitor C1 and a Q-factor determined by the resistor R and the L1/C1 ratio. The Q-factor increases the antenna current relatively to the transmitter current, but has as a negative consequence a strongly varying impedance Z1 of the parallel circuit, as shown in Fig. 3. At the frequencies f1 and f2, the magnitude of the impedance has decreased by 30%. The distance between f1 and f2 decreases at an increasing Q-factor according to:

$$f2 - f1 = fo/Q$$

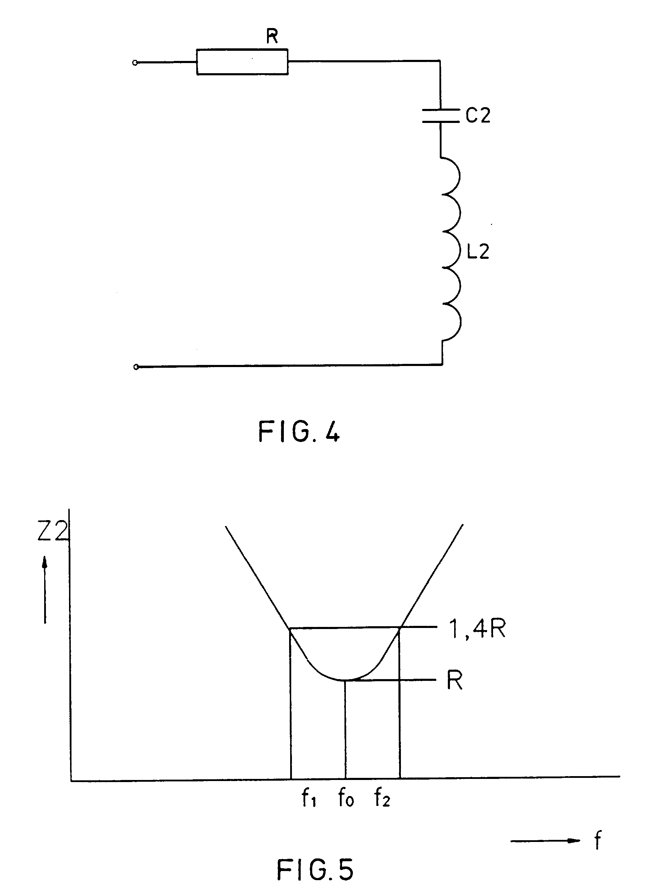

An alternative is formed by the series circuit shown in Fig. 4, comprising a resistor R, a capacitor C2 and a coil L2. This series circuit has an impedance variation Z2, shown in Fig. 5, whose variation is opposite to that of the parallel circuit; at f1 and f2 the magnitude of the impedance has increased by 40% relatively to the impedance at the resonance frequency fo. In both cases the Q-factor determines the ratio of the magnetic energy in the coil, i.e. the field strength, and the transmitter power available; in other words, the efficiency.

A frequency-dependent impedance is a problem in particular if the transmitter is situated at some distance from the antenna, so that a transmission line (for instance a coaxial cable) must be placed between transmitter and antenna. An intermediate length of transmission line causes the impedance "seen" by the transmitter (source) to be even more frequency-dependent. The standing waves that are thus formed in the cable result in interfering resonances.

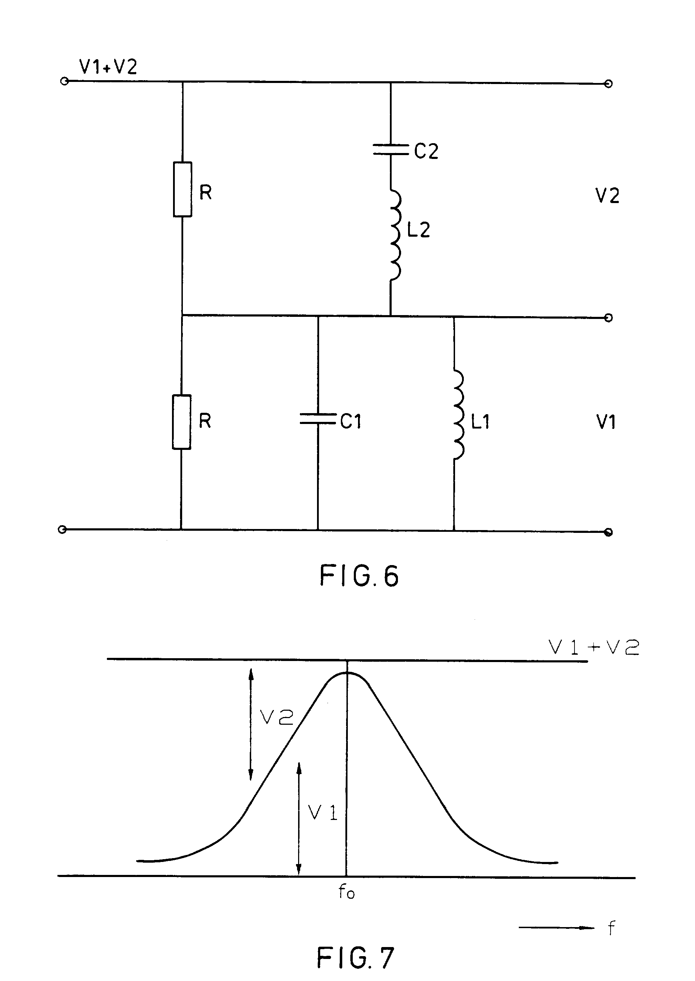

According to the invention, by placing the two types of networks of Figs 2 and 4 in series with the same quality factor Q and resonance frequency and with the same, for instance common, load resistance, a constant impedance can be realized. A schematic example is shown in Fig. 6. In the circuit shown in Fig. 6, the parallel circuit is formed by L1 and C1, and the series circuit by L2 and C2.

In this example,
it applies that:

$$L1/C1 = R^2/Q^2$$

and

$$L2/C2 = R^2 \times Q^2 = L1/C1 \times Q^4$$

with

$$L1 \times C1 = L2 \times C2 = (1/2\pi fo)^2$$

Here, the voltage variation over the parallel circuit V1 is determined by the impedance variation of the circuit with the frequency as if the circuit is fed by a current source. Hence, the voltage variation is independent of the transmitter impedance. However, the maximum voltage over the circuit V1 at the resonance frequency is the same as in the case where the series circuit is absent. The voltage over the series circuit V2 has an opposite variation, so that the total voltage over the series-connected networks V1 and V2 is constant, as is shown in Fig. 7. To the current in the series circuit, about the same applies as to the voltage over the parallel circuit.
From the network comparisons it further follows that:

- the currents in the two coils have more or less the same frequency variation;
- the average energy contents $I^2 \times L$ are equal;
- at all frequencies, the phase difference between the two coil currents is 90 degrees.

An antenna network thus combined forms a frequency-independent impedance for the transmitter.

To remove dead spots as a result of a wrong field orientation, such as may be responsible for the trouser pocket effect, magnetic rotary fields can be used. An example thereof is given in EP-A-0186483 by Senelco Limited.

In essence, a magnetic rotary field is generated by two magnetic fields, which:

1. are spatially perpendicular to each other, and
2. differ in phase relatively to each other by 90 degrees.

According to EP-A-0186483, a rotary field is generated with two antennas, separately controlled by two transmitters which, in turn, are controlled from one signal via a 90 degrees phase-shifting network.

Alternatively, one transmitter may be used, followed by a power splitter and a phase-shifting network. In both cases, the double transmission power is required to realize the same field strength by means of the two antennas as is realized by means of one antenna.

In the case of a receiver antenna, the detection sensitivity for a field in one of the two orientations will be halved by the power splitter relatively to the sensitivity with one antenna.

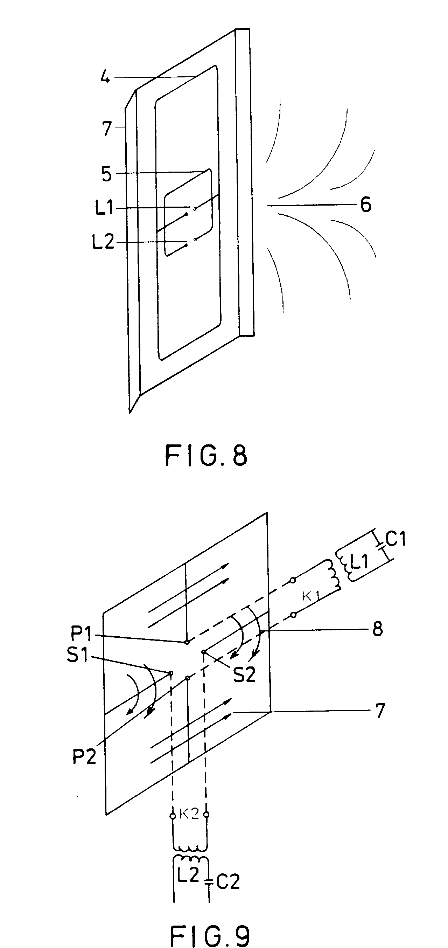

An alternative to a rotary field is alternately energizing the two antennas. This eventually yields the same reduction in field strength or sensitivity as the above-mentioned method. The reason that magnetic rotary fields are not yet widely applied in shoplifting detection systems is the complexity of the equipment required for feeding the two antennas as in EP-A-0186483, and the reduction in field strength or sensitivity.
The coil L2, provided in the impedance-compensation network shown in Fig. 6 and described hereinabove, produces a magnetic field, shifted in phase through 90 degrees relatively to the transmitting antenna coil L1. By positioning the coil L2 as an additional auxiliary antenna, as shown in Fig. 8, a magnetic rotary field is generated in a simple manner.

In the network described above and shown in Figs 6 and 8, the resonance of two antenna coils is damped by one resistor. Here, both antennas are coupled to the transmitter or receiver to the same extent as in the case of one antenna, unlike the conventional method in which the coupling is halved in both directions. In the circuit of Fig. 6, the power available is utilized twice, as it were.

Thus, the invention combines the use of an impedance conversion network and the loss-less generation of a magnetic rotary field.

Fig. 8 shows an example of an embodiment of an antenna configuration according to the invention. A conventional, shielded eight-shaped antenna 4 is incorporated as a coil L1 in a parallel circuit and forms the main antenna. A small zero-shaped antenna 5 at the centre of the eight-shaped antenna is incorporated as a coil L2 in a series circuit and forms the auxiliary antenna.

The auxiliary antenna provides an additional horizontal field 6 at the centre. The horizontal field, together with the vertical field of the main antenna, approximately equally large, forms a rotary field, enabling detection of a label in all orientations.

Because at distances greater than its width, the field of a zero-shaped antenna reduces less quickly than that of an equally wide eight-shaped antenna, and because the pocket trouser effect only occurs at the centre, the auxiliary antenna, at a comparable field strength, can be smaller than the main antenna.

Fig. 8 further shows a shield 7, positioned behind the antenna configuration. In the shield 7 behind the auxiliary antenna, an opposed current is induced, strongly reducing the field strength at a great distance, so that at a distance of for instance 10 m, this current is not much greater than that of the main antenna. If the symmetry of the main antenna is disturbed by metal in the environment, or by a non-perpendicular arrangement, the far field of the main antenna will even be predominant.

In this configuration, the sensitivity to interfering fields from outside the system is therefore comparable to that of a shielded eight-shaped antenna, in spite of the zero-chaped antenna used.

An alternative antenna configuration is a combination of two uniplanar eight-shaped antennas forming one mechanical whole. Fig. 9 shows an example. The connection points of the two coils L1 and L2 are indicated by P1, P2 and S1, S2 respectively.

The magnetic field lines of L1 and L2, indicated in Fig. 9 by 7 and 8 respectively, result in a rotary field, comprising, above the whole plane except at the centre, a component perpendicular to the plane, so that a detection label passing the antenna parallel to this plane will always be detected.

For detection labels passing parallel to the antenna plane, symmetric eight-shaped antennas have a dead spot in the form of a plane, perpendicular to the antenna plane, intersecting the antenna plane at the transverse joint. A uniplanar system of two independent eight-shaped detection antennas has a dead spot being on the line where the two separate dead spots intersect. This intersecting line is perpendicular to the antenna plane and intersects the antenna plane at the junction of the two transverse joints.

If the transverse joints of the two antennas intersect perpendicularly, the two coils are inductively uncoupled and can be controlled by the circuit of Fig. 6 via two transformer couplings k1, k2 as parallel and series circuits. Accordingly, the magnetic fields of the two eight-shaped antennas are 90 degrees out of phase, so that they, as it were, function independently as detection antenna. A dead spot in the form of a line ensures that a detection label which passes parallel to the antenna plane can always be detected.

Consequently, this antenna configuration combines the advantages of a zero-shaped antenna and those of an eight-shaped antenna: 1) no dead spots in which a label oriented parallel to the antenna plane can pass without being detected, and 2) a small field strength at a great distance relatively to a strong field at a short distance.

It is observed that after the foregoing, various modifications will readily occur to a person skilled in the art. For instance, the resonance circuits may comprise several coils or capacitors. Also, an antenna configuration as described can, for instance, be used in a horizontal position or another orientation. Optionally, the antenna coils can be coupled to a circuit according to Fig. 6 via a transformer. Such modifications are considered to fall within the scope of the invention.

**Claims**

1. An electromagnetic detection system comprising at least one source circuit and at least one source circuit-controlled antenna configuration, which comprises two loop antenna coils, substantially located in one plane or in closely spaced parallel planes, for generating a detection field in a detection zone, and a plurality of responders, provided with a loop antenna coil, detectable in the detection zone by means of the detection field, <u>characterized in that</u> one loop antenna coil of the antenna configuration is part of a series resonance circuit, and that the other loop antenna coil is part of a parallel resonance circuit, the series and parallel resonance circuits having the same resonance frequency and being interconnected to form a combined antenna network connected to the source circuit, and the series and parallel resonance circuits being dimensioned such that the frequency-dependent parts of the impedances substantially compensate each other, so that the combined antenna network has a substantially frequency-independent impedance.

2. An electromagnetic detection system according to claim 1, <u>characterized in that</u> the series resonance circuit and the parallel resonance circuit have the same quality factor Q.

3. An electromagnetic detection system according to claim 1 or 2, <u>characterized in that</u> the series resonance circuit and the parallel resonance circuit have the same load resistance.

4. An electromagnetic detection system according to any one of the preceding claims, <u>characterized in that</u> the antenna configuration comprises an eight-shaped main antenna and a substantially smaller, zero-shaped auxiliary antenna, positioned at the centre of or at a short distance from the plane of the main antenna, which auxiliary antenna, during operation, supplements the magnetic field, oriented parallel to said plane of the main antenna, at the centre of the main antenna to form a magnetic rotary field.

5. A magnetic detection system according to any one of claims 1-3, <u>characterized in that</u> the antenna configuration comprises two eight-shaped antennas, substantially positioned in one plane, shifted through 90° in the plane relatively to each other, one eight-shaped antenna being coupled to the parallel resonance circuit and the other eight-shaped antenna being coupled to the series resonance circuit.

6. A magnetic detection device according to claim 5, <u>characterized in that</u> the two eight-shaped antennas form one mechanical whole, but are magnetically uncoupled by the use of a common loop having two sets of symmetrically positioned transverse branches, extending transversely to each other, provided with terminals, the terminals of one transverse branch being coupled via a first transformer coupling to the parallel resonance circuit and the terminals of the second transverse branch being coupled via a second transformer coupling to the series resonance circuit.

7. An electromagnetic detection system according to any one of the preceding claims, <u>characterized in that</u> the source circuit is spaced from the antenna coils and connected thereto via a relatively long cable.

8. An antenna device for use in an electromagnetic detection system, <u>characterized in that</u> the antenna device comprises two loop antenna coils, substantially positioned in one plane or in closely spaced planes, and that one antenna coil is part of a series resonance circuit and the other antenna coil is part of a parallel resonance circuit, the series and parallel resonance circuits having the same resonance frequency and being interconnected to form a combined antenna network, the series and parallel resonance circuits being dimensioned such that the combined antenna network has a substantially frequency-independent impedance.

9. An antenna device according to claim 8, <u>characterized in that</u> the series resonance circuit and the parallel resonance circuit have the same quality factor Q.

10. An antenna device according to claim 8 or 9, <u>characterized in that</u> the series resonance circuit and the parallel resonance circuit have the same load resistance.

11. An antenna device according to any one of claims 8-10, <u>characterized in that</u> the antenna configuration comprises an eight-shaped main antenna and a substantially smaller, zero-shaped auxiliary antenna, positioned at the centre of or at a short distance from the plane of the main antenna, which auxiliary antenna, during operation, supplements the magnetic field, oriented parallel to said plane of the main antenna, at the centre of the main antenna to form a magnetic rotary field.

12. An antenna device according to any one of claims 8-10, <u>characterized in that</u> the antenna configuration comprises two eight-shaped antennas, substantially positioned in one plane, shifted through 90° in the plane relatively to each other, one eight-shaped antenna being coupled to the parallel resonance circuit and the other eight-shaped antenna being coupled to the series resonance circuit.

13. An antenna device according to claim 12, <u>characterized in that</u> the two eight-shaped antennas form one mechanical whole, but are magnetically uncoupled by the use of a common loop having two sets of symmetrically positioned transverse branches, extending transversely to each other, provided with terminals, the terminals of one transverse branch being coupled via a first transformer coupling to the parallel resonance circuit and the terminals of the second transverse branch being coupled via a second transformer coupling to the series resonance circuit.

**Patentansprüche**

1. Elektromagnetisches Detektorsystem, versehen mit mindestens einer Quellenschaltung und mindestens einer durch die Quellenschaltung gesteuerten Antennenkonfiguration, die zwei im wesentlichen in einer Ebene oder in in kurzem Abstand voneinander liegenden parallelen Ebenen angeordnete Schleifenantennenspulen zur Erzeugung eines Detektorfeldes in einer Detektorzone umfaßt sowie mehrere mit einer Schleifenantennenspule versehene Responder, die in der Detektorzone mittels des Detektorfeldes detektierbar sind, dadurch gekennzeichnet, daß die eine Schleifenantennenspule der Antennenkonfiguration Teil eines Reihenresonanzkreises ist und daß die andere Schleifenantennenspule Teil eines Parallelresonanzkreises ist, wobei die Reihen- und Parallelresonanzkreise dieselbe Resonanzfrequenz haben und miteinander verbunden sind, um ein zusammengesetztes Antennennetzwerk zu bilden, das mit der Quellenschaltung verbunden ist, und wobei die Reihen- und Parallelresonanzkreise derart bemessen sind, daß die frequenzabhängigen Teile der Impedanzen einander im wesentlichen ausgleichen, so daß das zusammengesetzte Antennennetzwerk eine im wesentlichen frequenzunabhängige Impedanz hat.

2. Elektromagnetisches Detektorsystem nach Anspruch 1, dadurch gekennzeichnet, daß der Reihenresonanzkreis und der Parallelresonanzkreis dieselbe Qualitätsfaktor Q haben.

3. Elektromagnetisches Detektorsystem nach Anspruch 1 oder 2, dadurch gekennzeichnet, daß der Reihenresonanzkreis und der Parallelresonanzkreis denselben Belastungswiderstand haben.

4. Elektromagnetisches Detektorsystem nach einem der vorhergehenden Ansprüche, dadurch gekennzeichnet, daß die Antennenkonfiguration eine 8-förmige Hauptantenne umfaßt und eine in der Mitte der oder in kurzem Abstand von der Ebene der Hauptantenne angeordnete, viel kleinere 0-förmige Hilfsantenne, die im Betrieb das parallel zu der genannten Ebene der Hauptantenne gerichtete magnetische Feld in der Mitte der Hauptantenne zu einem magnetischen Drehfeld ergänzt.

5. Elektromagnetisches Detektorsystem nach einem der Ansprüche 1 bis 3, dadurch gekennzeichnet, daß die Antennenkonfiguration zwei im wesentlichen in einer Ebene angeordnete 8-förmige Antennen umfaßt, die relativ zueinander um 90° in der Ebene gedreht sind, wobei die eine 8-förmige Antenne mit dem Parallelresonanzkreis und die andere 8-förmige Antenne mit dem Reihenresonanzkreis gekoppelt ist.

6. Elektromagnetisches Detektorsystem nach Anspruch 5, dadurch gekennzeichnet, daß die zwei 8-förmigen Antennen mechanisch ein Ganzes bilden, aber magnetisch entkoppelt sind durch Verwendung einer gemeinsamen Schleife mit zwei Sätzen sich quer zueinander erstreckender, symmetrisch angeordneter Querzweige mit Anschlußklemmen, wobei die Anschlußklemmen des einen Querzweiges über eine erste Transformatorkopplung mit dem Parallelresonanzkreis und die Anschlußklemmen des zweiten Querzweiges über eine zweite Transformatorkopplung mit dem Reihenresonanzkreis gekoppelt sind.

7. Elektromagnetisches Detektorsystem nach einem der vorhergehenden Ansprüche, dadurch gekennzeichnet, daß die Quellenschaltung im Abstand von den Antennenspulen angeordnet und über ein relativ langes Kabel damit verbunden ist.

8. Antennenvorrichtung zur Verwendung in einem elektromagnetischen Detektorsystem, dadurch gekennzeichnet, daß die Antennenvorrichtung zwei im wesentlichen in einer Ebene oder in kurzem Abstand voneinander angeordnete Schleifenantennenspulen umfaßt und daß die eine Antennenspule Teil eines Reihenresonanzkreises und die andere Antennenspule Teil eines Parallelresonanzkreises ist, wobei die Reihen- und Parallelresonanzkreise dieselbe Resonanzfrequenz haben und miteinander verbunden sind, um ein zusammengesetztes Antennennetzwerk zu bilden, wobei die Reihen- und Parallelresonanzkreise derart bemessen sind, daß das zusammengesetzte Antennennetzwerk eine im wesentlichen frequenzunabhängige Impedanz hat.

9. Antennenvorrichtung nach Anspruch 8, dadurch gekennzeichnet, daß der Reihenresonanzkreis und der Parallelresonanzkreis dieselbe Qualitätsfaktor Q haben.

10. Antennenvorrichtung nach Anspruch 8 oder 9, dadurch gekennzeichnet, daß der Reihenresonanzkreis und der Parallelresonanzkreis denselben Belastungswiderstand haben.

11. Antennenvorrichtung nach einem der Ansprüche 8 bis 10, dadurch gekennzeichnet, daß die Antennenkonfiguration eine 8-förmige Hauptantenne umfaßt und eine in der Mitte der oder in kurzem Abstand von der Ebene der Hauptantenne angeordnete, viel kleinere 0-förmige Hilfsantenne, die im Betrieb das parallel zu der genannten Ebene der Hauptantenne gerichtete magnetische Feld in der Mitte der Hauptantenne zu einem magnetischen Drehfeld ergänzt.

12. Antennenvorrichtung nach einem der Ansprüche 8 bis 10, dadurch gekennzeichnet, daß die Antennenkonfiguration zwei im wesentlichen in einer Ebene angeordnete 8-förmige Antennen umfaßt, die relativ zueinander um 90° in der Ebene gedreht sind, wobei die eine 8-förmige Antenne mit dem Parallelresonanzkreis und die andere 8-förmige Antenne mit dem Reihenresonanzkreis gekoppelt ist.

13. Antennenvorrichtung nach Anspruch 12, dadurch gekennzeichnet, daß die zwei 8-förmigen Antennen mechanisch ein Ganzes bilden, aber magnetisch entkoppelt sind durch Verwendung einer gemeinsamen Schleife mit zwei Sätzen sich quer zueinander erstreckender, symmetrisch angeordneter Querzweige mit Anschlußklemmen, wobei die Anschlußklemmen des einen Querzweiges über eine erste Transformatorkopplung mit dem Parallelresonanzkreis und die Anschlußklemmen des zweiten Querzweiges über eine zweite Transformatorkopplung mit dem Reihenresonanzkreis gekoppelt sind.

## Revendications

1. Un système électromagnétique de détection comprenant au moins un circuit d'alimentation et au moins une configuration d'antenne commandée par un circuit d'alimentation, laquelle comprend deux antennes-cadres, situées pratiquement dans un même plan ou dans des plans parallèles faiblement espacés, servant à générer un champ de détection dans une zone de détection, et une pluralité de répondeurs, équipés d'une antenne-cadre, détectables dans la zone de détection au moyen du champ de détection, caractérisé en ce qu'une antenne-cadre de la configuration d'antenne fait partie d'un circuit série de résonance, et en ce que l'autre antenne-cadre fait partie d'un circuit parallèle de résonance, les circuits de résonance série et parallèle ayant la même fréquence de résonance et étant interconnectés de façon à former un réseau d'antenne combiné connecté au circuit d'alimentation, et les circuits de résonance série et parallèle étant dimensionnés de telle manière que les parties des impédances dépendant de la fréquence se compensent pratiquement mutuellement, de telle sorte que le réseau d'antenne combiné possède une impédance pratiquement indépendante de la fréquence.

2. Un système électromagnétique de détection suivant la revendication 1, caractérisé en ce que le circuit série de résonance et le circuit parallèle de résonance ont le même facteur de surtension Q.

3. Un système électromagnétique de détection suivant la revendication 1 ou 2, caractérisé en ce que le circuit série de résonance et le circuit parallèle de résonance ont la même résistance externe.

4. Un système électromagnétique de détection suivant l'une quelconque des revendications précédentes, caractérisé en ce que la configuration d'antenne comprend une antenne principale en forme de huit et une antenne auxiliaire nettement plus petite en forme de zéro, positionnée au centre ou à courte distance du plan de l'antenne principale, laquelle antenne auxiliaire, en fonctionnement, renforce le champ magnétique, orienté parallèlement audit plan de l'antenne principale, au centre de l'antenne principale de façon à former un champ magnétique tournant.

5. Un système magnétique de détection suivant l'une quelconque des revendications 1 à 3, caractérisé en ce que la configuration d'antenne comprend deux antennes en forme de huit, positionnées pratiquement dans un même plan, décalées de 90° dans le plan l'une par rapport à l'autre, une antenne en forme de huit étant couplée au circuit parallèle de résonance et l'autre antenne en forme de huit étant couplée au circuit série de résonance.

6. Un système magnétique de détection suivant la revendication 5, caractérisé en ce que les deux antennes en forme de huit forment mécaniquement un tout, mais sont magnétiquement découplées par l'utilisation d'une boucle commune ayant deux jeux de branches transversales placées symétriquement, s'étendant transversalement l'une par rapport à l'autre, pourvues de terminaisons, les terminaisons d'une branche transversale étant couplées par l'intermédiaire d'un premier transformateur au circuit parallèle de résonance et les terminaisons de la seconde branche transversale étant couplées par l'intermédiaire d'un second transformateur au circuit série de résonance.

7. Un système électromagnétique de détection suivant l'une quelconque des revendications précédentes, caractérisé en ce que le circuit d'alimentation est espacé des antennes-cadres et connecté à celles-ci par l'intermédiaire d'un câble relativement long.

8. Un dispositif d'antenne pour utilisation dans un système électromagnétique de détection, caractérisé en ce que le dispositif d'antenne comprend deux antennes-cadres, situées pratiquement dans un même plan ou dans des plans parallèles faiblement espacés, et en ce qu'une antenne-cadre fait partie d'un circuit série de résonance et l'autre antenne-cadre fait partie d'un circuit parallèle de résonance, les circuits de résonance série et parallèle ayant la même fréquence de résonance et étant interconnectés de façon à former un réseau d'antenne combiné, les circuits de résonance série et parallèle étant dimensionnés de telle manière que le réseau d'antenne combiné possède une impédance pratiquement indépendante de la fréquence.

9. Un dispositif d'antenne suivant la revendication 8, caractérisé en ce que le circuit série de résonance et le circuit parallèle de résonance ont le même facteur de surtension Q.

10. Un dispositif d'antenne suivant la revendication 8 ou 9, caractérisé en ce que le circuit série de résonance et le circuit parallèle de résonance ont la même résistance externe.

11. Un dispositif d'antenne suivant l'une quelconque des revendications 8-10, caractérisé en ce que la configuration d'antenne comprend une antenne principale en forme de huit et une antenne auxiliaire nettement plus petite en forme de zéro, positionnée au centre ou à courte distance du plan de l'antenne principale, laquelle antenne auxiliaire, en fonctionnement, renforce le champ magnétique, orienté parallèlement audit plan de l'antenne principale, au centre de l'antenne principale afin de former un champ magnétique tournant.

12. Un dispositif d'antenne suivant l'une quelconque des revendications 8-10, caractérisé en ce que la configuration d'antenne comprend deux antennes en forme de huit, positionnées pratiquement dans un même plan, décalées de 90° dans le plan l'une par rapport à l'autre, une antenne en forme de huit étant couplée au circuit parallèle de résonance et l'autre antenne en forme de huit étant couplée au circuit série de résonance.

13. Un dispositif d'antenne suivant la revendication 12, caractérisé en ce que les deux antennes en forme de huit forment mécaniquement un tout, mais sont magnétiquement découplées par l'utilisation d'une boucle commune ayant deux jeux de branches transversales placées symétriquement, s'étendant transversalement l'une par rapport à l'autre, pourvues de terminaisons, les terminaisons d'une branche transversale étant couplées par l'intermédiaire d'un premier transformateur au circuit parallèle de résonance et les terminaisons de la seconde branche transversale étant couplées par l'intermédiaire d'un second transformateur au circuit série de résonance.

FIG.1

FIG.2

FIG.3

FIG. 4

FIG.5

V1+V2

R

C2

L2

V2

R

C1

L1

V1

FIG.6

V1+V2

V2

V1

fo

f

FIG.7

FIG. 8

FIG. 9